# FASCICULE DE BREVET EUROPEEN

(11) **EP 0 808 680 B1**
(45) Date de publication et mention de la délivrance du brevet: **11.08.1999**
(21) Numéro de dépôt: 97400971.4
(22) Date de dépôt: 29.04.1997
(51) Int. Cl.: B22D 17/30, B22D 39/00, B29C 45/46

(54) **Machine à injecter ou à couler sous pression**
Maschine zum Pressen oder Giessen unter Druck
Apparatus for injecting or casting under pressure

(30) Priorité: 22.05.1996 FR 9606364
(43) Date de publication de la demande: 26.11.1997
(73) Titulaire: Celes, F-68610 Lautenbach (FR)
(72) Inventeur: Collot, Jean, 06160 Antibes (FR); Roehr, Philippe, 68610 Lautenbach-Zell (FR)
(74) Mandataire: Armengaud Ainé, Alain

(56) Documents cités:
- WO-A-92/13662
- MANUFACTURING TECHNOLOGY NOTE, FRANCIS QUIGLEY: "Economical Casting of Ferrous Alloys" juillet 1979 , NTN-79/0682, U.S. ARMY MATERIEL DEVELOPMENT AND READINESS COMMAND, OFFICE OF MANUFACTURING TECHNOLOGY, ALEXANDRIA, VIRGINIA XP002025139 * le document en entier *

## Description

La présente invention concerne un dispositif d'alimentation d'une machine à injecter ou à couler sous pression, ou de l'outil de presse d'une machine à forger et en particulier d'une matrice de presse à forger, pour des matériaux à l'état semi-solide, solide, semi-liquide ou liquide.

Elle vise plus particulièrement le dispositif d'alimentation de la chambre d'injection d'une telle machine , ou de la matrice de presse, assurant le chauffage et le transfert de lopins en matériau métallique ou plastique, chargé ou non, ce dispositif permettant d'alimenter, de façon rapide, ladite chambre d'injection, ou ladite matrice de presse.

A l'heure actuelle, on utilise des manipulateurs pour effectuer le transfert de lopins réchauffés dans la chambre d'injection des machines à couler sous pression. Ces manipulateurs sont conçus de manière à saisir le lopin réchauffé en position verticale, à la sortie du four de réchauffage, pour le transférer dans la chambre d'injection. Les inconvénients de cette solution antérieure sont nombreux, notamment :
- le lopin réchauffé en position verticale a tendance à s'avachir compte-tenu de son élancement vers le haut ;
- le lopin risque de subir des déformations lors de sa préhension par le manipulateur ;
- le temps de transfert entre le four de réchauffage et la chambre d'injection est trop long ;
- il se produit une perte de matière durant le transfert ;
- le réchauffage d'un lopin dure plusieurs minutes, ce qui est inacceptable pour des lopins constitués de métaux tels que le magnésium qui brûlent ou s'oxydent en fin de réchauffage et ,
- la mise sous atmosphère protectrice est compliquée.

L'article de Francis Quigley 〈〈Economical Casting of Ferrous Alloys publié dans 〈〈MANUFACTURlNG TECHNOLOGY NOTE〉〉, juillet 1979 NTN 79/0682 décrit une technique d'alimentation d'une machine à injecter dans laquelle le lopin semi-solide est réchauffer en position verticale puis est délivré par l'intermédiaire d'un toboggan dans un système d'alimentation du type à piston de la Chambre d'injection d'une machine à couler. Cette technique antérieure présente un certain nombre d'inconvénients relatifs notamment au chauffage en position verticale ainsi qu'au transfert le long d'un toboggan qui entraîne des frottements se traduisant par une déformation du lopin. Cette technique ne donne donc pas satisfaction.

Il existe d'autres dispositifs qui sont conçus de façon à pousser le lopin à l'aide d'un piston, pour l'amener dans la chambre d'injection, ces dispositifs présentant un risque de déformation du lopin lorsque ce dernier est à l'état pateux, ce qui se traduit par une perte de matière.

Enfin, on connaît d'autres dispositifs réalisés de manière à délivrer le lopin en le faisant tourner le long d'un plan incliné. Ces dispositifs connus présentent également le risque d'une déformation du lopin lors de sa phase de roulage. Par ailleurs, ces dispositifs exigent un temps de transfert trop important.

La présente invention se propose d'apporter un dispositif qui pallie les inconvénients des solutions antérieures brièvement rappelées ci-dessus.

Cette invention a donc pour objet un dispositif d'alimentation d'une chambre d'injection d'une machine à couler ou à injecter sous pression ou d'un outil de presse ou d'une matrice de presse à forger assurant le transfert d'un lopin en matériau métallique ou plastique, chargé ou non, à l'état liquide, solide, semi-liquide ou semi-solide qui comporte un support à axe horizontal recevant et logeant le lopin et des moyens pour déplacer ledit support en vue d'assurer le transfert du lopin dans la chambre d'injection ou dans la matrice de presse, caractérisé en ce que ledit support est positionné dans au moins un système de chauffage et en ce que lesdits moyens pour assurer le transfert du lopin sont constitués d'une part de moyens déplaçant ledit support selon un mouvement de translation horizontale transportant ledit lopin de la position chauffage jusqu'à une position située à la verticale de la chambre d'injection ou de la matrice de presse et d'autre part, de moyens pour déplacer ledit support selon un mouvement de rotation autour de son axe afin d'entraîner la chute du lopin, toujours en position horizontale, par gravité, dudit support dans ladite chambre d'injection, ou dans la matrice de presse.

Selon l'invention, ledit support est constitué d'un tube, pouvant présenter une section circulaire ou prismatique, réalisé en un matériau réfractaire et dont le diamètre est légèrement supérieur à celui du lopin à transférer. Ce tube comporte une découpe qui délimite un logement de forme sensiblement semi-cylindrique pour recevoir le lopin. Cette découpe peut être réalisée de façon à délimiter un logement en forme de cuillère, ou en forme d'auge, et elle peut être éventuellement pratiquée sur toute la longueur du tube.

Selon l'invention, le tube recevant le lopin est emmanché dans une pièce métallique de forme cylindrique, avec interposition de joints par exemple toriques, afin de maintenir ledit tube serré dans cette pièce métallique. Cette dernière peut être percée d'un ajutage raccordé à une conduite d'amenée d'un gaz protecteur.

Selon une caractéristique de l'invention, la pièce métallique maintenant serré ledit tube est montée sur un vérin pneumatique qui communique au tube un mouvement de rotation par rapport à son axe, ce vérin pneumatique rotatif étant lui-même monté à l'extrémité d'un vérin communiquant audit tube un mouvement de translation alternatif (avant-arrière) selon son axe.

Selon l'invention, ledit tube recevant le lopin est positionné dans au moins un système de chauffage par induction ou par effet Joule, les axes des systèmes de chauffage étant situés, juste avant le déclenchement du mouvement de rotation du tube, sensiblement dans le plan vertical passant par l'axe de la chambre d'injection ou de la matrice de presse.

Selon un autre aspect de cette invention, celle-ci a pour objet une machine à couler ou à injecter sous pression, ou une presse à forger pour matériau à l'état liquide, semi-solide ou semi-liquide caractérisée en ce qu'elle comporte une pluralité de dispositifs d'alimentation tels que définis ci-dessus.

D'autres caractéristiques de l'invention sont définies dans les revendications annexées à la présente description.

On décrira maintenant des exemples de réalisation de la présente invention en se référant aux dessins annexés. Il demeure bien entendu que ces exemples n'ont aucun caractère limitatif.

Sur les dessins :
- La figure 1 est une vue schématique en perspective d'un premier exemple de réalisation du dispositif d'alimentation selon la présente invention ;
- Les figures 2 à 4 sont des vues schématiques partielles, en perspective de diverses variantes du support de lopin utilisé dans le dispositif d'alimentation selon l'invention.
- Les figures 5 à 8 sont des vues schématiques en élévation latérale illustrant les diverses phases de fonctionnement du dispositif d'alimentation selon la présente invention ;

La figure 9 illustre une variante de l'invention mettant en oeuvre deux dispositifs d'alimentation, cette figure étant une vue schématique en coupe verticale transversale ;

Les figures 10 à 12 sont des vues schématiques similaires à la figure 9 illustrant diverses variantes de l'invention mettant en oeuvre une pluralité de dispositifs d'alimentation et,

La figure 13 illustre les séquences de fonctionnement de la variante de l'invention illustrée par la figure 12.

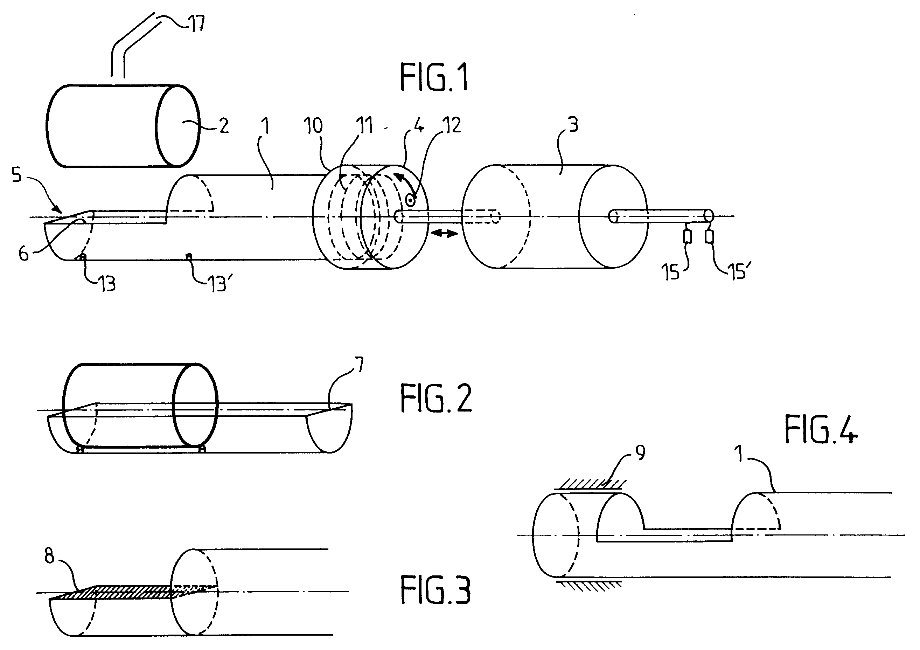

On se réfère en premier lieu à la figure 1 qui représente le dispositif d'alimentation selon la présente invention, selon son mode d'exécution préféré.

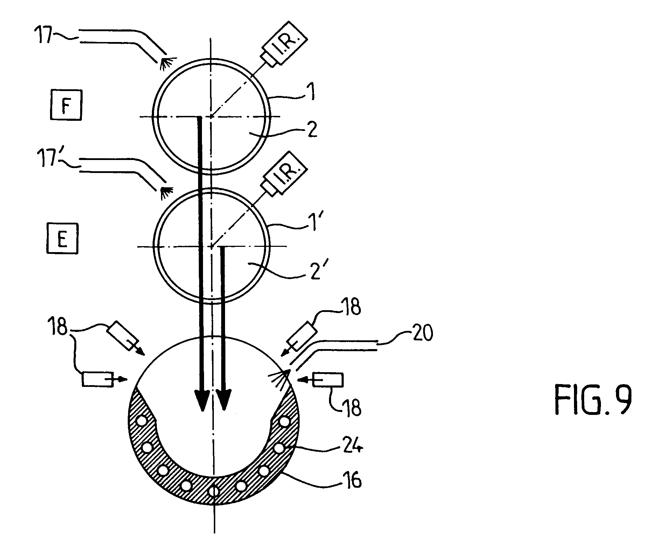

Dans cet exemple de réalisation, le dispositif d'alimentation comprend un support pour le lopin 2 qui est réalisé sous la forme d'un tube 1, en un matériau réfractaire, par exemple en céramique, quartz ou alumine, en matériau composite ou plastique renforcé. Ce tube 1 présente un diamètre légèrement supérieur à celui du lopin 2 devant être transféré vers la chambre d'injection (non représentée sur la figure 1 mais visible en 16 sur les figures 9 à 12) de la machine à couler et à injecter sous pression ou vers la matrice d'une presse à forger. Le tube 1 est emmanché dans une pièce métallique 10 de forme cylindrique avec interposition de joints, par exemple toriques 11, de manière à maintenir le tube 1 serré. Ladite pièce cylindrique 10 comporte dans son fond un ajutage 12 dans lequel débouche une conduite d'amenée d'un gaz protecteur. On utilise en effet selon l'invention un tel gaz protecteur dans le cas où le dispositif doit manipuler des lopins constitués de métaux, tel que le magnésium, susceptibles de brûler ou de s'oxyder. Ce gaz protecteur peut être par exemple un mélange de CO2, SF6 et air ou un mélange de CO2 et SF6 sans air.

Le tube 1, qui présente une section circulaire ou prismatique, est muni d'une découpe 5 qui délimite un logement semi-cylindrique destiné à recevoir le lopin 2. Sur la figure 1, ce logement présente la forme d'une cuillère 6. Dans la variante illustrée par la figure 2, la découpe est pratiquée sur toute la longueur du tube et le logement 7 du lopin présente alors une forme totalement semi-cylindrique. Dans la variante de l'invention illustrée par la figure 3, le logement du lopin présente la forme d'une auge 8. Dans le cas de la variante illustrée par la figure 4, le tube 1 comporte un prolongement ce qui se traduit par un porte-à-faux important et, selon l'invention, on prévoit dans ce cas des moyens 9 destinés à soutenir l'une des extrémités dudit tube.

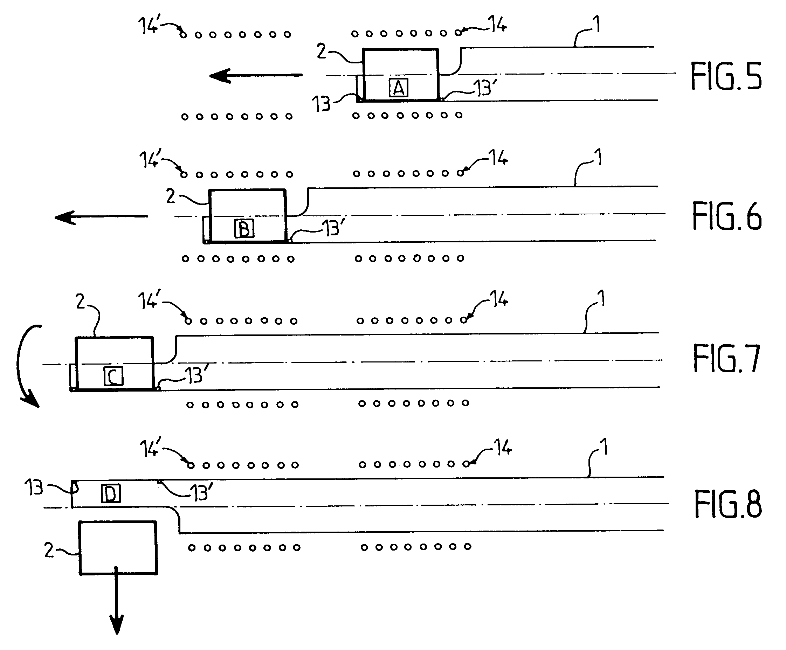

La partie du tube 1 munie de la découpe 5 et servant de logement au lopin à transférer 2 comporte dans son fond des ergots tels que 13, 13' réalisés en la même matière que le tube et qui sont destinés à servir de cales au lopin 2 afin d'empêcher ce dernier de se déplacer dans son logement. En effet, sous l'influence du champ magnétique développé par le système de chauffage par induction décrit ci-après (figures 5 à 8, références 14, 14'), le lopin 2 peut avoir tendance à se déplacer s'il n'est pas parfaitement centré dans le système de chauffage par induction. Ce phénomène se produit plus particulièrement dans le cas de lopins en matériaux très légers par exemple en alliages à base de magnésium. La présence des ergots tels que 13 et 13' est encore plus importante lorsque le dispositif manipule des lopins en alliage de magnésium à forte teneur en lithium (30 à 40%) qui ont une densité inférieure à 1.

Selon l'invention, on prévoit au-dessus de l'extrémité du tube 1 muni du logement pour le lopin 2, une conduite 17 d'alimentation d'un produit de poteyage afin d'éviter tout collage du lopin dans son logement.

Ainsi qu'on la expliqué dans le préambule de la présente description, le tube 1, conçu de façon à recevoir et loger le lopin 2, comporte d'une part des moyens permettant de le déplacer selon un mouvement de translation horizontale pour transporter le lopin d'une cellule de chauffage jusqu'à une position située à la verticale de la chambre d'injection ou de la matrice de presse lorsque le dispositif selon l'invention est appliqué à une machine à forger et, d'autre part des moyens pour déplacer ce tube selon un mouvement de rotation afin d'entraîner la chute du lopin, par gravité, du tube 1 dans la chambre d'injection, ou dans la matrice de presse. Dans l'exemple de réalisation illustré par la figure 1, ces moyens sont réalisés sous la forme de deux vérins :
- d'une part, un vérin pneumatique 4 communiquant au tube 1 un mouvement de rotation par rapport à son axe schématisé en traits mixtes sur la figure 1. De préférence, ce mouvement rotatif permet de faire effectuer au tube 1 un demi-tour en 0,1 sec. environ ;
- d'autre part, un vérin pneumatique 3 fixé sur le vérin pneumatique de rotation 4, ce vérin 3 communiquant au tube 1 un mouvement de translation alternatif (avant ou arrière) selon l'axe de ce tube.

Selon l'invention, on prévoit des contacts de fin de course 15, 15' sur la tige du vérin pneumatique de translation 4 de manière à assurer la mise en marche ou l'arrêt du système de réchauffage qui est disposé autour du dispositif d'alimentation illustré par la figure 1, comme on le décrira maintenant.

Ainsi qu'on l'a représenté notamment sur les figures 5 à 8, le système de réchauffage peut être réalisé sous la forme d'un système de chauffage par induction 14, 14' dont les bobines sont co-axiales au tube 1 et entourent ce dernier. On peut bien entendu, utiliser un autre type de chauffage, par exemple un chauffage par effet Joule.

Sur les figures 5 à 8, on a prévu deux inducteurs 14, 14' mais cependant leur nombre peut être réduit à un seul ou être supérieur à 2. En effet, le dispositif selon la présente invention peut mettre en oeuvre un seul inducteur alimenté par des puissances et des fréquences successives différentes de manière à chauffer le lopin 2 en un temps inférieur ou voisin d'une minute. En fin de cycle, le lopin 2 est ainsi porté à une température homogène qui est située entre les températures de liquidus et de solidus du métal ou de l'alliage constituant le lopin 2. Lorsqu'on utilise deux inducteurs comme dans le cas de l'exemple de réalisation illustré par les figures 5 à 8, l'un des inducteurs 14 sert à préchauffer à coeur le lopin 2 alors que le second inducteur 14' est utilisé pour le maintien en température du lopin afin d'obtenir une température homogène dans toute la masse de ce dernier.

Selon la présente invention, on prévoit un système de réchauffage des lopins. Ceux-ci, au lieu d'être positionnés dans le tube de transfert 1 à la température ambiante, peuvent y être déposés à une température plus élevée grâce à un préchauffage, réalisé par exemple dans un four tunnel ou à effet Joule. Les lopins ayant ainsi préalablement accumulé une certaine quantité de chaleur, mettent ensuite moins longtemps pour être amenés à la température appropriée par le système de chauffage par induction 14, 14'. Ainsi, un préchauffage de l'ordre de 100°C ou de quelques centaines de degrés Celcius, est suffisant pour diminuer le temps du chauffage par induction de plusieurs secondes ou mêmes de plusieurs minutes si le lopin est de dimension importante.

Les figures 5 à 8 illustrent les différentes phases successives de fonctionnement du dispositif d'alimentation selon la présente invention, tel qu'illustré par la figure 1.

La figure 5 représente le lopin 2 dans sa position de préchauffage A au centre de l'inducteur de préchauffe 14, le lopin étant maintenu en position dans son logement du tube 1 par les ergots 13, 13'.

La figure 6 représente le lopin 2 qui est passé de la position A (figure 5) à la position B sous l'effet d'une translation obtenue par le vérin 3, la position B du lopin 2 étant centrée dans le second inducteur 14'. Dans cette position, la température du lopin est complètement homogène.

La figure 7 représente le lopin 2 en position C, sorti du second inducteur 14', le tube 1 ayant poursuivi sa translation selon son axe 1, sous l'effet du vérin 3.

La figure 8 représente le tube 1 ayant subi une rotation d'un demi-tour grâce au vérin de rotation 4, le lopin 2 quittant alors son logement du tube 1 (position D) pour tomber en chute libre directement dans la chambre d'injection ou dans la matrice de presse, située sous son logement, à la verticale de ce dernier, non représentée sur la figure 8 mais visible en 16 notamment sur la figure 9.

Dès que le lopin est tombé dans la chambre d'injection 16, des moyens (décrits ci-après en référence à la figure 9) permettent de contrôler son bon positionnement dans la chambre d'injection et dès que ce contrôle a été effectué, l'injection est déclenchée. Lorsque le dispositif selon l'invention est appliqué à une presse à forger, le dispositif de transfert décrit ci-dessus fait une incursion rapide entre la matrice de la presse et le poinçon pour déverser un lopin. Dès que le dispositif de transfert est rétracté, le poinçon de la presse est libre de descendre pour effectuer l'opération de forgeage.

On soulignera que toute les opérations illustrées par les figures 5 à 8 s'effectuent dans un temps inférieur ou voisin de la minute, ce qui permet de réchauffer un lingot en alliage de magnésium tel que l'AZ 91, sans que ce dernier ait le temps de brûler même en l'absence d'injection du gaz protecteur délivré au-travers de l'ajutage 12 (figure 1).

On se réfère maintenant à la figure 9 qui illustre une variante de l'invention comportant deux dispositifs d'alimentation du type illustré par les figures précédentes. Dans cette variante, ces deux dispositifs d'alimentation sont superposés verticalement, leurs axes étant situés dans le plan vertical passant par l'axe de la chambre d'injection 16 ou dans la matrice de presse. On a schématisé en 1 et 1', les tubes des deux systèmes d'alimentation avec leur conduite d'alimentation 17, 17' d'un produit de poteyage, les lopins respectifs étant représentés en 2, 2'. Sur cette même figure 9, on a représenté en 18, les moyens prévus par l'invention pour contrôler le bon positionnement d'un lopin 2 ou 2' dans la chambre d'injection 16. Dans cet exemple de réalisation, ces moyens peuvent être réalisés sous la forme de cellules infra-rouge ou de capteurs de proximité et de passage. Dès que le contrôle du bon positionnement du lopin dans la chambre d'injection 16 (ou dans la matrice de presse) a été effectué, un signal donne immédiatement l'ordre de déclencher l'injection (ou la descente du poinçon de la presse) à l'aide d'un piston (non représenté) disposé dans la chambre 16. Cette dernière comporte des trous pour des résistances chauffantes ainsi qu'on l'a représenté en 24. Selon l'invention, on prévoit également une conduite 20 pour amener un produit de poteyage sous forme de poudre ou de liquide dans la chambre d'injection 16 afin d'éviter tout collage du lopin dans cette dernière.

Cette variante de l'invention illustrée par la figure 9 utilise deux dispositifs superposés E et F identiques à ceux décrits par les figures 5 à 8, un dispositif permettant de commencer le chauffage d'un lopin 2' alors que l'autre lopin 2 est déjà à mi-temps du réchauffage dans l'autre dispositif. Par ailleurs les positions A, B, C, D des dispositifs E et F sont celles relatives aux figures 5 à 8.

Le fonctionnement de cette variante de l'invention est le suivant :
- le premier lopin 2', dans le dispositif E est chauffé similaire à celui décrit ci-dessus en référence en position A selon un processus aux figures 5 à 8. Au bout d'environ 30 sec., il passe en position B, le second lopin 2 commence à chauffer en position A dans l'autre dispositif F similaire à celui illustré par les figures 5 à 8, positionné au-dessus dans un plan vertical passant par l'axe d'injection et l'axe du dispositif d'alimentation situé en dessous.

A l'expiration d'une minute environ, le lopin 2' sort de l'inducteur en position B pour passer dans la position C (voir la figure 7), puis subir une rotation d'un demi-tour et finalement tomber directement dans la chambre d'injection 16 (comme illustré sur la figure 8). L'injection, comme décrit ci-dessus se produit immédiatement et l'on obtient une pièce moulée. Pendant ce temps, le lopin 2 passe en position B et un troisième lopin a été chargé dans le dispositif d'alimentation situé en dessous et il commence à chauffer en position A.

Environ trente secondes plus tard, le second lopin 2 passe en position C, (voir la figure 7), puis il subit une rotation d'un demi-tour et tombe finalement dans la chambre d'injection (voir la figure 8) et ainsi de suite. Après le déversement du lopin dans la chambre d'injection 16, le tube 1 du dispositif d'alimentation subit une rotation d'un demi-tour en sens inverse sous l'effet du vérin de rotation 4 et il est immédiatement rechargé à l'aide d'un nouveau lopin. On peut ainsi obtenir une injection toutes les 30 secondes. Pendant ces trente secondes, on a effectué la coulée sous pression d'une pièce, son refroidissement, son éjection, le poteyage du moule en position ouverte en utilisant de préférence un mélange constitué de poudres dans le cas de lopins d'alliages semi-solides ou semi-liquides, et la fermeture du moule.

Bien entendu, la variante décrite ci-dessus en référence à la figure 9 peut également s'appliquer à une presse à forger, le dispositif de transfert assurant l'alimentation du poinçon de la presse.

Selon la présente invention, on peut travailler en temps masqué et augmenter encore la cadence d'injection (ou la cadence de forgeage dans le cas d'une application de l'invention à une presse à forger) par superposition d'une pluralité de dispositifs identiques à celui illustré par les figures 5 à 8, ce qui permet d'assurer des cadences de production identiques à celles qui sont habituellement obtenues avec des matériaux à l'état liquide. Grâce à l'invention, on a même réussi à réchauffer un lopin d'alliage de magnésium (AZ 91) en environ une minute avec un seul inducteur. Le grand avantage de l'invention est qu'il permet d'opérer sans bain de fusion, donc en toute sécurité dans le cas d'alliages inflammables.

Le dispositif selon la présente invention peut être utilisé pour le réchauffage et le transfert de lopins en matière plastique chargés d'un matériau conducteur de l'électricité, par exemple de l'ABS chargé au coke ou polymères conducteurs chargés de fibres de carbone ou métalliques et aussi de noir de carbone. Certains de ces matériaux sont réputés être difficile à injecter. De plus, les machines classiques à vis actuellement utilisées entraînent un cisaillement important qui a pour conséquence la réduction de 1 ou 2 ordres de grandeur dans la conductivité des pièces moulées en polymères conducteurs. Le dispositif de la présente invention permet d'éviter cet inconvénient, il permet de plus un réchauffage rapide qui évite aussi une exposition prolongée à haute température qui entraîne une réduction irréversible de la conductivité. Ce dispositif rend ainsi le matériau susceptible d'être réchauffé par induction.

Le dispositif selon la présente invention peut être complété en prévoyant un robot manipulateur destiné à saisir les lopins à l'état solide pour les déposer dans le ou les différents supports d'alimentation (tube 1 et leur découpe de positionnement des lopins) décrits ci-dessus.

On notera qu'il est essentiel pour l'invention que les axes des divers dispositifs de réchauffage tels que 14 et 14', soient situés, immédiatement avant le déclenchement du mouvement de rotation sous l'action du vérin rotatif 4, sensiblement dans le plan vertical passant par l'axe de la chambre d'injection 16 de manière que le lopin passe directement de sa position de maintien horizontal dans son logement 6, 7 ou 8 du tube 1, par chute libre, sous l'effet de la gravité et sans aucun contact ni intervention d'un quelconque manipulateur. Ainsi, grâce à l'invention, il est même possible de faire tomber dans la chambre d'injection des lingots complètement fondus.

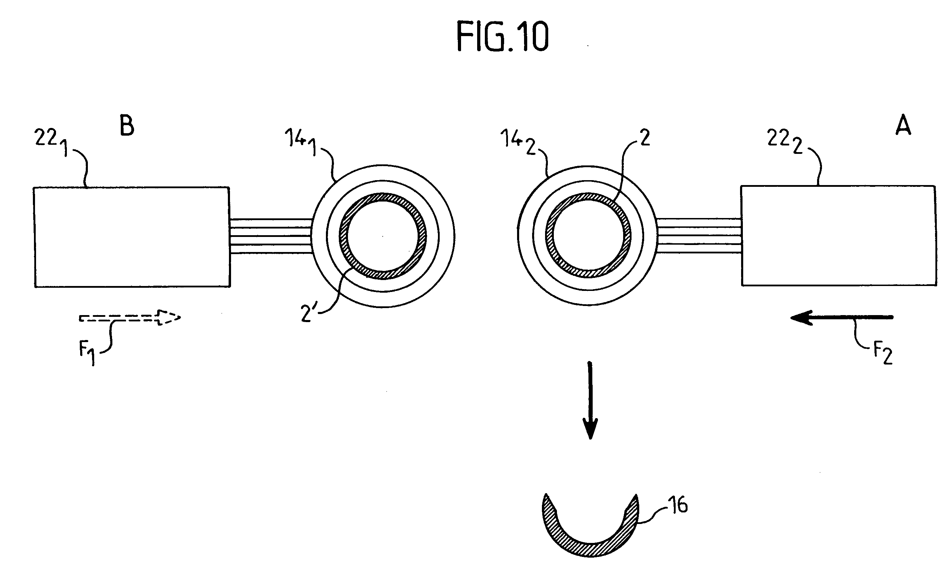

Dans la variante de l'invention illustrée par la figure 10, les dispositifs d'alimentation sont disposés horizontalement au lieu d'être disposés verticalement comme décrit ci-dessus. Selon cette figure 10, on a prévu deux dispositifs d'alimentation disposés dans le même plan horizontal chacun d'eux ayant été schématisés par ses inducteurs de chauffage respectivement 14₁ et 14₂ avec leur coffret d'adaptation respectif 22₁ et 22₂.

Dans cette variante, les dispositifs d'alimentation selon l'invention avec leurs inducteurs de chauffage respectifs ne sont pas fixés comme précédemment à la machine d'injection mais ils sont montés sur un chariot coulissant (non représenté) se déplaçant selon les flèches F₁ et F₂ . Cette disposition est réalisée de manière que chaque dispositif d'alimentation puisse délivrer un lopin réchauffé à la chambre d'injection unique 16. Cette même variante peut bien entendu s'appliquer également à une presse à forger.

Sur cette figure 10, l'ensemble du dispositif d'alimentation et de chauffage situé en position A sur la droite de cette figure est en phase de chauffage et prêt à déverser le lopin 2 dans la chambre d'injection 16. Pendant ce temps, le dispositif identique situé en position B sur la gauche en regardant la figure 10, commence à préchauffer un autre lopin 2'. Lorsque ce lopin 2' a été réchauffé et après que le lopin 2 ait été transféré dans la chambre d'injection 16 et que le dispositif d'alimentation et de chauffage situé en position A ait été ramené dans la position de réchauffage d'un nouveau lopin, l'ensemble du dispositif situé en B est déplacé grâce à son chariot coulissant selon la flèche F₁ de manière à amener le lopin 2' au-dessus de la chambre d'injection 16 dans lequel il est transféré par gravité, comme décrit ci-dessus, en référence notamment au figure 5 à 8. Ensuite, ce même dispositif est ramené en position de réchauffage pour recevoir un nouveau lopin, cependant que l'autre dispositif de chauffage et d'alimentation situé en position A peut alimenter la chambre d'injection 16 à l'aide du lopin qui était en position de réchauffage, cette opération étant réalisée grâce à la présence du chariot coulissant sur lequel est monté chaque dispositif de chauffage et d'alimentation de lopin.

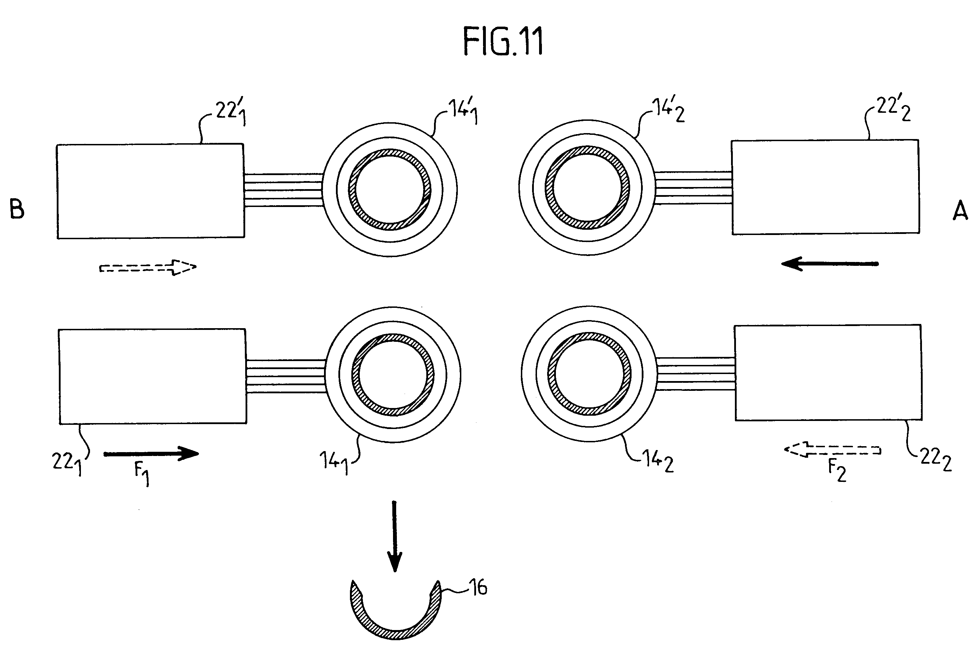

La figure 11 illustre une variante du mode de réalisation représenté par la figure 10. Dans cette variante, on a dédoublé le système en superposant deux dispositifs tels qu'illustrés par la figure 10. Ainsi, dans cette variante, on a superposé deux paires identiques de dispositifs de chauffage et d'alimentation respectivement 14₁, 22₁, 14₂, 22₂ et 14'₁, 22'₁, 14'₂, 22'₂ montées chacune sur chariot coulissant, de la même manière que décrite ci-dessus, en référence à la figure 10, pour obtenir des déplacements en translation selon les flèches F₁ et F₂ de façon à alimenter successivement en lopins réchauffés la chambre d'injection 16.

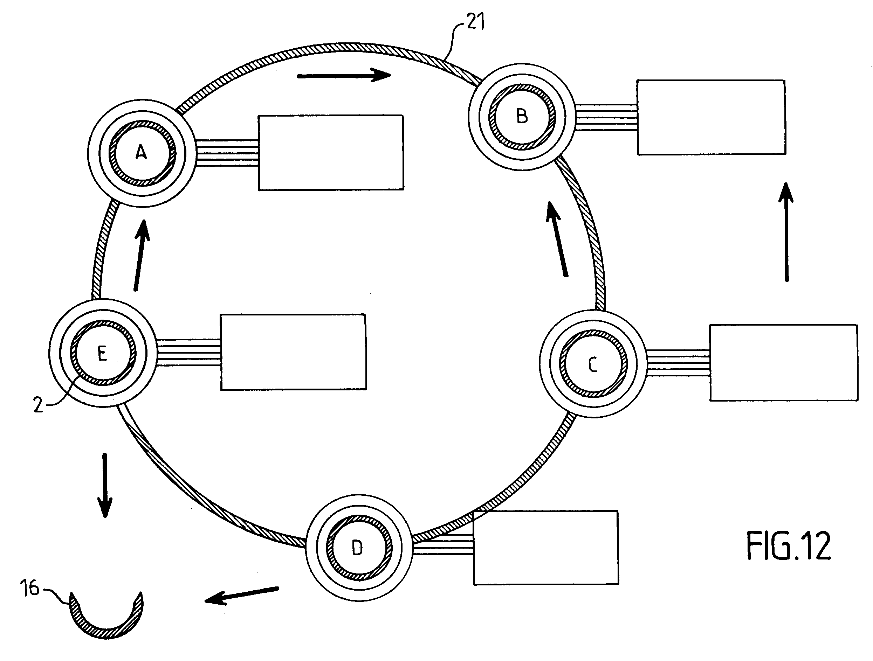

Une autre possibilité offerte par la présente invention consiste à multiplier les postes de réchauffage de lopins en les disposant sur une courbe fermée de forme quelconque, par exemple selon un cercle 21 comme illustré par la figure 12, les dispositifs d'alimentation du type décrit ci-dessus, notamment en référence aux figures 1 à 8 étant alors montés sur un plateau tournant ou sur un transporteur du type noria positionné sur une coulisse permettant un déplacement en translation alternative (avance - recul ) de l'ensemble. Sur cette figure 12, on a représenté, de façon schématique une installation selon cette variante de l'invention, comportant cinq postes de chauffage (ce nombre n'étant bien entendu pas limitatif), du type inducteur ou four, ces postes étant situés en position fixe sur le cercle 21 respectivement en A, B, C, D, E. A chacun de ces postes correspond un dispositif d'alimentation en lopin comme spécifié ci-dessus.

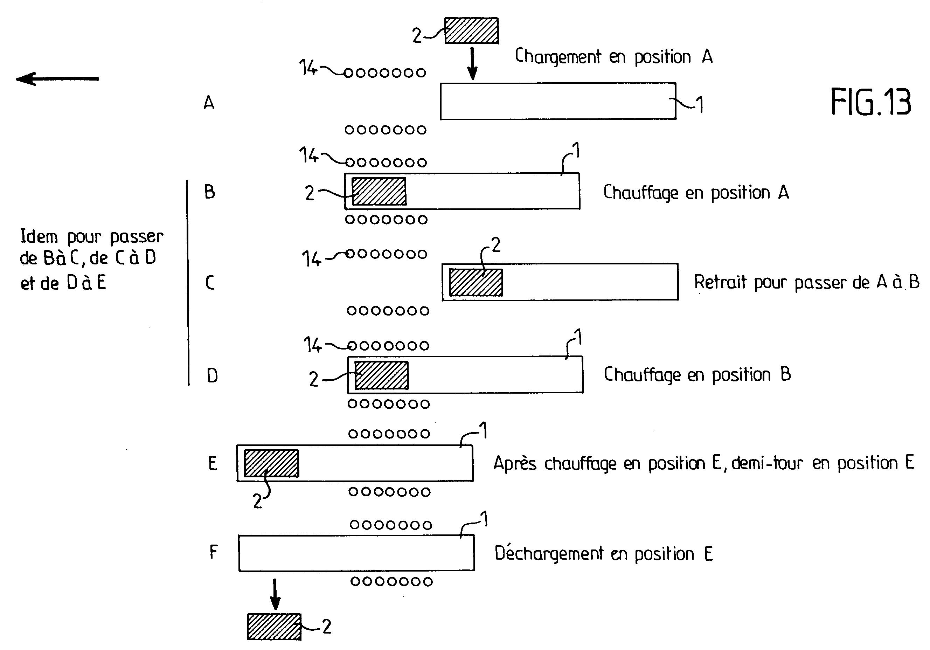

La séquence de fonctionnement de ce dispositif a été indiquée sur le schéma de la figure 13. Il est le suivant :
- un dispositif d'alimentation en lopins est en position rétractée arrière dans laquelle il reçoit un lopin froid 2 qui est positionné dans le logement du dispositif d'alimentation (tube 1) par l'intermédiaire d'un système de chargement (non représenté) ;
- le dispositif d'alimentation est ensuite amené en position A dans laquelle le lopin 2 est réchauffé par le ou les inducteurs 14 ;
- ce dispositif d'alimentation est ensuite rétracté à partir de la position A afin de dégager le lopin précedemment réchauffé en l'éloignant du système de réchauffage 14, et pour passer en regard de la position B, par rotation d'un cinquième de tour du plateau tournant sur lequel est monté ce dispositif d'alimentation ;
- le dispositif d'alimentation subit alors une nouvelle translation pour amener le lopin 2 en position B où se poursuit son réchauffage par le dispositif d'inducteurs 14;
- les mêmes opérations que décrites ci-dessus se répètent ensuite pour réaliser les passages successifs de B à C, de C à D et de D à E ;
- enfin, dans la position E, le lopin 2 subit un chauffage final puis il est déchargé dans la chambre d'injection 16, de la manière décrite ci-dessus en référence notamment aux figures 7 et 8.

Grâce à ce mode de réalisation, le lopin 2, dans les différents postes de chauffage A-D, est chauffé progressivement avec des puissances et éventuellement des fréquences d'induction différentes qui sont choisies de manière à obtenir un chauffage homogène de ce lopin lorsqu'il arrive en position E immédiatement avec son transfert dans la chambre d'injection 16, par le dispositif d'alimentation selon la présente invention.

Selon encore un autre exemple de réalisation du dispositif objet de cette invention, les postes de chauffage par induction peuvent être remplacés par un tunnel chauffant ou par une combinaison d'inducteurs et d'une ou plusieurs enceintes chauffantes par rayonnement ou convection. Comme on l'a précisé ci-dessus, le nombre de postes de chauffage dans la variante illustrée par les figures 12 et 13 peut être quelconque et non limité à 5. On soulignera qu'avec un dispositif comportant cinq postés de chauffage, il est possible d'atteindre une cadence supérieure, avec des lopins 2 à l'état pâteux, à celle obtenue par injection de métal liquide, étant donné que la température de la pièce injectée est inférieure et donc que son temps de refroidissement est plus court.

Il résulte de la lecture de la description qui précède que l'invention apporte un dispositif permettant de transférer des lopins à l'état solide, semi-solide, semi-liquide ou liquide, sans leur faire subir de déformation ou de perte de matière, tout en obtenant des cadences de transfert supérieures à celles pouvant être obtenues par les dispositifs actuellement utilisés.

Il demeure bien entendu que la présente invention n'est pas limitée aux exemples de réalisation décrits et/ou mentionnés ici, mais qu'elle en englobe toutes les variantes dans le cadre des revendications annexées. C'est ainsi notamment que le dispositif d'alimentation selon la présente invention s'applique non seulement à une chambre d'injection d'une machine à couler ou à injecter sous pression mais également, ainsi qu'on l'a mentionné ci-dessus à une presse à forger, pour l'alimentation de l'outil ou de la matrice de presse. Toutes les variantes décrites ci-dessus s'appliquent également à une telle presse à forger.

## Revendications

1. Dispositif d'alimentation d'une chambre d'injection d'une machine à couler ou à injecter sous pression ou d'un outil de presse ou d'une matrice de presse à forger assurant le transfert d'un lopin en matériau métallique ou plastique, chargé ou non, à l'état liquide, solide, semi-liquide ou semi-solide qui comporte un support à axe horizontal recevant et logeant le lopin et des moyens pour déplacer ledit support en vue d'assurer le transfert du lopin dans la chambre d'injection ou dans la matrice de presse, caractérisé en ce que ledit support (1) est positionné dans au moins un système de chauffage (14, 14') et en ce que lesdits moyens pour assurer le transfert du lopin (2) sont constitués d'une part de moyens (3) déplaçant ledit support (1) selon un mouvement de translation horizontale transportant ledit lopin (2) de la position chauffage jusqu'à une position située à la verticale de la chambre d'injection (16) ou de l'outil ou de la matrice de presse et d'autre part, de moyens (4) pour déplacer ledit support (1) selon un mouvement de rotation autour de son axe afin d'entraîner la chute du lopin, toujours en position horizontale, par gravité, dudit support dans ladite chambre d'injection, ou dans la matrice de presse.

2. Dispositif selon la revendication 1 caractérisé en ce que ledit support est constitué d'un tube (1) de section circulaire ou prismatique, en matériau réfractaire, présentant un diamètre légèrement supérieur à celui du lopin à transférer, ledit tube étant muni d'une découpe (5) pour délimiter un logement semi-cylindrique destiné à recevoir ledit lopin.

3. Dispositif selon la revendication 2 caractérisé en ce que ladite découpe (5) est positionnée à l'une des extrémités dudit tube et elle délimite un logement (6) en forme de cuillère.

4. Dispositif selon la revendication 2 caractérisé en ce que ladite découpe (5) est pratiquée sur toute la longueur dudit tube.

5. Dispositif selon la revendication 2 caractérisé en ce que ladite découpe (7) est en forme d'auge (8).

6. Dispositif selon l'une quelconque des revendications 2 à 5 caractérisé en ce que ledit tube (1) est muni de moyens d'appui (9) à l'une de ses extrémités.

7. Dispositif selon l'une quelconque des revendications 2 à 6 caractérisé en ce que ledit tube est emmanché dans une pièce métallique de forme cylindrique (10), avec interposition de joints (11), notamment toriques afin de maintenir ledit tube serré dans ladite pièce cylindrique.

8. Dispositif selon la revendication 7 caractérisé en ce que ladite pièce cylindrique (10) dans laquelle est emmanché le tube (1) est percée en son fond d'un ajutage (12) pour amener un gaz protecteur.

9. Dispositif selon la revendication 2 caractérisé en ce que la surface interne dudit tube comporte des ergots (13, 13') servant de cales au lopin qu'il reçoit.

10. Dispositif selon la revendication 1 caractérisé en ce que ledit support est en un matériau choisi dans le groupe comprenant les matériaux céramiques, le quartz, l'alumine, les matériaux composites ou plastiques renforcés.

11. Dispositif selon l'une des revendications 7 ou 8 caractérisé en ce que ladite pièce cylindrique (10) qui maintient ledit tube (1) est monté sur un vérin pneumatique (4) communiquant audit tube un mouvement de rotation par rapport à son axe.

12. Dispositif selon la revendication 11 caractérisé en ce que ledit vérin pneumatique rotatif (4) est lui-même monté à l'extrémité d'un vérin pneumatique (3) communiquant audit tube un mouvement de translation alternatif selon son axe.

13. Dispositif selon l'une quelconque des revendications précédentes caractérisé en ce que ledit système de chauffage (14, 14'), est du type par induction ou par effet Joule.

14. Dispositif selon l'une quelconque des revendications précédentes caractérisé en ce que ledit vérin pneumatique de translation (3) comporte des contacts de fin de course (15, 15') pour assurer la mise en marche et respectivement l'arrêt du système de chauffage entourant ledit tube.

15. Dispositif selon l'une des revendications 13 à 14 caractérisé en ce que les axes des systèmes de chauffage sont situés, juste avant le déclenchement du mouvement de rotation, sensiblement dans le plan vertical passant par l'axe de la chambre d'injection (16) ou de la matrice de presse.

16. Dispositif selon l'une quelconque des revendications précédentes caractérisé en ce que le support (1) de lopin est muni de moyens de poteyage (17).

17. Dispositif selon l'une quelconque des revendications précédentes caractérisé en ce qu'il comporte des moyens de préchauffage du lopin, du type four-tunnel ou à effet Joule, positionnés avant le transfert du lopin dans ledit support (1).

18. Machine à couler ou à injecter sous pression, ou à forger pour des matériaux à l'état liquide, semi-liquide ou semi-solide caractérisée en ce qu'elle est munie d'une pluralité de dispositifs d'alimentation selon l'une quelconque des revendications 1 à 17.

19. Machine selon la revendication 18 caractérisée en ce qu'elle comporte deux dispositifs d'alimentation (1, 1') superposés verticalement au-dessus de la chambre d'injection (16), ou de la matrice de presse.

20. Machine selon la revendication 18 caractérisée en ce qu'elle comporte plusieurs dispositifs d'alimentation disposés horizontalement, chaque dispositif d'alimentation avec son système de chauffage (14₁, 14₂) étant monté sur un chariot de transfert coulissant afin de délivrer successivement un lopin (2, 2') dans la chambre d'injection (16), ou dans la matrice de presse.

21. Machine selon la revendication 18 caractérisée en ce qu'elle comporte des paires de dispositifs d'alimentation horizontales, avec leur système de chauffage respectif (14₁, 14₂ ; 14'₁, 14'₂) qui sont disposées en superposition verticale.

22. Machine selon la revendication 18 caractérisée en ce que les postes de chauffage (A, B, C, D, E) sont disposés sur une courbe fermée (21) et les dispositifs d'alimentation de même nombre que lesdits postes de chauffage sont mobiles et montés sur un plateau tournant.

23. Machine selon l'une quelconque des revendications 18 à 22 caractérisée en ce que la chambre d'injection, ou la matrice de presse, est munie de capteurs (18) en vue de contrôler le bon positionnement du lopin dans ladite chambre, ou dans ladite matrice, le signal émis par lesdits capteurs pouvant être utilisés pour commander l'injection (16), ou la descente du poinçon de la presse.

24. Machine à couler ou à injecter sous pression selon l'une quelconque des revendications 18 à 23 caractérisée en ce que la chambre d'injection (16) est munie de moyens de poteyage (20).

25. Application d'une machine selon l'une quelconque des revendications 18 à 24 à l'injection des polymères conducteurs.

## Claims

1. Apparatus for the supply of an injection chamber of a machine for casting or injecting under pressure or a press tool or a forging press die ensuring the transfer of a filled or unfilled bloom of a metallic or plastics material in the liquid, solid, semi-liquid or semi-solid state, which has a horizontally axed support receiving and housing the bloom and means for displacing said support with a view to the transfer of the bloom into the injection chamber or into the press die, characterized in that said support (1) is positioned in at least one heating system (14, 14') and in that said means for ensuring the transfer of the bloom (2) are constituted on the one hand by means (3) displacing said support (1) in a horizontal translation movement transporting said bloom (2) from the heating position to a position vertical of the injection chamber (16) or the press tool or press die and on the other hand means (4) for displacing said support (1) in a rotary movement about its axis in order to bring about the dropping of the bloom, still in the horizontal position, by gravity, from said support into said injection chamber or into the press die.

2. Apparatus according to claim 1, characterized in that said support is constituted by a tube having a circular or prismatic section and made from a refractory material, having a diameter slightly larger than that of the bloom to be transferred, said tube being provided with a cutout (5) for defining a semicylindrical recess for receiving said bloom.

3. Apparatus according to claim 2, characterized in that said cutout (5) is positioned at one of the ends of said tube and defines a spoon-shaped recess (6).

4. Apparatus according to claim 2, characterized in that said cutout (5) is made over the entire length of said tube.

5. Apparatus according to claim 2, characterized in that said cutout (7) is shaped like a feeding trough (8).

6. Apparatus according to any one of the claims 2 to 5, characterized in that said tube is provided at one of its ends with bearing means (9).

7. Apparatus according to any one of the claims 2 to 6, characterized in that said tube is fastened in a cylindrically shaped metal part (10), with the interposing of joints (11), particularly O-rings, in order to maintain said tube tightly fixed in said cylindrical part.

8. Apparatus according to claim 7, characterized in that the bottom of the cylindrical part (10) in which is fastened the tube (1) is perforated by a nozzle (12) for supplying a protective gas.

9. Apparatus according to claim 2, characterized in that the inner surface of said tube has lugs (13, 13') serving as shims for the bloom which it receives

10. Apparatus according to claim 1, characterized in that said support is made from a material chosen from within the group including ceramic materials, quartz, alumina and reinforced plastic or composite materials.

11. Apparatus according to one of the claims 7 or 8, characterized in that the cylindrical part (10) maintaining said tube (1) is mounted on a pneumatic jack (4) imparting to said tube a rotary movement with respect to its axis.

12. Apparatus according to claim 11, characterized in that said rotary pneumatic jack (4) is mounted on the end of a pneumatic jack (3) imparting to said tube an alternating translation movement along its axis.

13. Apparatus according to any one of the preceding claims, characterized in that said heating system (14, 14') is of the Joule effect or induction type.

14. Apparatus according to any one of the preceding claims, characterized in that said translation pneumatic jack (3) has end of travel contacts (15, 15') for ensuring the starting up and stopping of the heating system surrounding said tube.

15. Apparatus according to one of the claims 13 and 14, characterized in that the axes of the heating systems are located, just prior to the initiation of the rotary movement, substantially in the vertical plane passing through the axis of the injection chamber (16) or the press die.

16. Apparatus according to any one of the preceding claims, characterized in that the bloom support (1) is provided with anti-stick means (17).

17. Apparatus according to any one of the preceding claims, characterized in that it has means for the preheating of the bloom, of the Joule effect or tunnel kiln type, positioned prior to the transfer of the bloom in said support (1).

18. Machine for casting or injecting under pressure or forging for materials in the liquid, semi-liquid or semi-solid state, characterized in that it is equipped with a plurality of supply apparatuses according to any one of the claims 1 to 17.

19. Machine according to claim 18, characterized in that it is equipped with two supply apparatuses (1, 1') vertically superimposed above the injection chamber (16) or the press die.

20. Machine according to claim 18, characterized in that it has several horizontally positioned supply apparatuses, each supply apparatus with its heating system (14₁, 14₂) being installed on a sliding transfer trolley in order to successively deliver a bloom (2, 2') into the injection chamber (16) or into the press die.

21. Machine according to claim 18, characterized in that it has horizontal supply apparatus pairs with their respective heating system (14₁, 14₂; 14'₁, 14'₂) arranged in vertically superimposed manner.

22. Machine according to claim 18, characterized in that the heating stations (A, B, C, D, E) are placed on a closed curve (21) and the supply apparatuses, in the same number as the heating stations, are mobile and mounted on a rotary plate.

23. Machine according to any one of the claims 18 to 22, characterized in that the injection chamber or press die is equipped with sensors (18) in order to check the good positioning of the bloom in said chamber or die, the signal emitted by said sensors being usable for controlling the injection (16) or the lowering of the press die.

24. Machine for casting or injecting under pressure according to any one of the claims 18 to 23, characterized in that the injection chamber (16) is provided with anti-stick means (20).

25. Application of a machine according to any one of the claims 18 to 24 to the injection of conductive polymers.

## Patentansprüche

1. Zuführvorrichtung für eine Spritzgießkammer einer Druckgieß- bzw. Spritzgießmaschine oder ein Schmiedepressenwerkzeug bzw. eine -matrize, welche den Transfer eines Rohteils aus metallischem Material oder gegebenenfalls verstärktem Kunststoffmaterial, das sich im flüssigen, festen, halbflüssigen oder halbfesten Zustand befindet, sicherstellt und einen Träger mit horizontaler Achse, der das Rohteil aufnimmt und behält, und Mittel zum Bewegen des Trägers, um für den Transfer des Rohteils in die Spritzgießkammer oder Pressenmatrize zu sorgen, umfaßt, **dadurch gekennzeichnet, daß** dieser Träger (1) in mindestens einem Erwärmungssystem (14, 14') angeordnet ist **und daß** die Mittel, welche für den Transfer des Rohteils (2) sorgen, einerseits aus Mitteln (3), die den Träger (1) in einer horizontalen Translationsbewegung fortbewegen, wodurch das Rohteil (2) von der Erwärmungsposition bis zu einer Position transportiert wird, die vertikal zur Spritzgießkammer (16) oder zum Pressenwerkzeug bzw. zur Pressenmatrize ist, und andererseits aus Mitteln (4) bestehen, die den Träger (1) in einer Drehbewegung um seine Achse bewegen, um durch Schwerkraft den Fall des Rohteils, das sich immer noch in horizontaler Position befindet, von diesem Träger in die Spritzgießkammer oder Pressenmatrize zu bewirken.

2. Vorrichtung nach Anspruch 1, **dadurch gekennzeichnet, daß** der Träger aus einem Rohr (1) aus hitzebeständigem Material mit kreisrundem oder prismatischem Querschnitt besteht, das einen Durchmesser besitzt, der etwas größer als der des zu transportierenden Rohteils ist und mit einem Ausschnitt (5) versehen ist, der eine halbzylindrische Aufnahme begrenzt, die dieses Rohteil aufnehmen soll.

3. Vorrichtung nach Anspruch 2, **dadurch gekennzeichnet, daß** der Ausschnitt (5) an einem Ende des Rohrs angeordnet ist und eine löffelförmige Aufnahme (6) begrenzt.

4. Vorrichtung nach Anspruch 2, **dadurch gekennzeichnet, daß** der Ausschnitt (5) über die gesamte Länge des Rohrs angebracht ist.

5. Vorrichtung nach Anspruch 2, **dadurch gekennzeichnet, daß** der Ausschnitt (7) die Form eines Trogs (8) hat.

6. Vorrichtung nach einem der Ansprüche 2 bis 5, **dadurch gekennzeichnet, daß** das Rohr (1) an einem Ende mit Stützmitteln (9) versehen ist.

7. Vorrichtung nach einem der Ansprüche 2 bis 6, **dadurch gekennzeichnet, daß** das Rohr in ein zylinderförmiges Metallteil (10) über insbesondere torische Dichtungen (11), um es in diesem zylinderförmigen Teil eingespannt zu halten, eingepreßt ist.

8. Vorrichtung nach Anspruch 7, **dadurch gekennzeichnet, daß** durch den Boden des zylinderförmigen Teils (10), in welches das Rohr (1) eingepreßt ist, eine Ansatzbohrung (12) für das Einleiten von Schutzgas führt.

9. Vorrichtung nach Anspruch 2, **dadurch gekennzeichnet, daß** die Innenfläche des Rohrs Vorsprünge (13, 13') enthält, die für das Rohteil, welches von ihm aufgenommen wird, als Feststeller dienen.

10. Vorrichtung nach Anspruch 1, **dadurch gekennzeichnet, daß** der Träger aus einem Material besteht, das aus der Gruppe ausgewählt ist, welche die keramischen Materialien, Quarz, Aluminiumoxid und die Verbundmaterialien oder verstärkten Kunststoffe umfaßt.

11. Vorrichtung nach Anspruch 7 oder 8, **dadurch gekennzeichnet, daß** das zylinderförmige Teil (10), welches das Rohr (1) hält, an einem pneumatischen Zylinder (4) angebracht ist, der dem Rohr eine Drehbewegung bezüglich dessen Achse verleiht.

12. Vorrichtung nach Anspruch 11, **dadurch gekennzeichnet, daß** der pneumatische Drehzylinder (4) seinerseits am Ende eines pneumatischen Zylinders (3) angebracht ist, welcher dem Rohr in dessen Achse eine hin- und hergehenden Translationsbewegung verleiht.

13. Vorrichtung nach einem der vorhergehenden Ansprüche, **dadurch gekennzeichnet, daß** das Erwärmungssystem (14, 14') auf der Grundlage von Induktion oder Joulescher Wärme arbeitet.

14. Vorrichtung nach einem der vorhergehenden Ansprüche, **dadurch gekennzeichnet, daß** der pneumatische Translationszylinder (3) Endschalter (15, 15') enthält, um das Ingangsetzen bzw. den Halt des das Rohr umgebenden Erwärmungssystems sicherzustellen.

15. Vorrichtung nach Anspruch 13 oder 14, **dadurch gekennzeichnet, daß** sich die Achse der Erwärmungssysteme unmittelbar vor dem Auslösen der Drehbewegung im wesentlichen in der vertikalen Ebene befindet, durch welche die Achse der Spritzgießkammer (16) oder der Pressenmatrize geht.

16. Vorrichtung nach einem der vorhergehenden Ansprüche, **dadurch gekennzeichnet, daß** der Träger (1) des Rohteils mit Mitteln (17) für eine Schlichte versehen ist.

17. Vorrichtung nach einem der vorhergehenden Ansprüche, **dadurch gekennzeichnet, daß** sie Mittel zum Vorwärmen des Rohteils wie einen Tunnelofen oder auf der Grundlage Joulescher Wärme umfaßt, die vor dem Transfer des Rohteils in den Träger (1) angeordnet sind.

18. Maschine zum Druckgießen, Spritzgießen oder Schmieden von Materialien im flüssigen, halbflüssigen oder halbfesten Zustand, **dadurch gekennzeichnet, daß** sie mit einer Vielzahl von Zuführvorrichtungen gemäß einem der Ansprüche 1 bis 17 ausgerüstet ist.

19. Maschine nach Anspruch 18, **dadurch gekennzeichnet, daß** sie zwei Zuführvorrichtungen (1, 1') enthält, die über der Spritzgießkammer (16) oder der Pressenmatrize senkrecht übereinander angeordnet sind.

20. Maschine nach Anspruch 18, **dadurch gekennzeichnet, daß** sie mehrere horizontal angeordnete Zuführvorrichtungen enthält, wobei jede Zuführvorrichtung mit ihrem Erwärmungssystem (14₁, 14₂) auf einem hin- und hergehenden Transportwagen angebracht ist, um nacheinander ein jeweiliges Rohteil (2, 2') in die Spritzgießkammer (16) oder Pressenmatrize zu bringen.

21. Maschine nach Anspruch 18, **dadurch gekennzeichnet, daß** sie Paare horizontaler Zuführvorrichtungen mit ihrem jeweiligen Erwärmungssystem (14₁, 14₂; 14'₁, 14'₂) enthält, die senkrecht übereinander angeordnet sind.

22. Maschine nach Anspruch 18, **dadurch gekennzeichnet, daß** die Erwärmungsstationen (A, B, C, D, E) auf einer geschlossenen Kurve (21) angeordnet sind und die Zuführvorrichtungen, deren Anzahl gleich der der Erwärmungsstationen ist, beweglich und auf einer Drehscheibe angebracht sind.

23. Maschine nach einem der Ansprüche 18 bis 22, **dadurch gekennzeichnet, daß** die Spritzgießkammer oder die Pressenmatrize mit Sensoren (18) für die Kontrolle der ordnungsgemäßen Positionierung des Rohteils in dieser Kammer oder Matrize ausgestattet ist, wobei das von den Sensoren abgegebene Signal genutzt werden kann, um den Spritzgießvorgang (16) oder das Herabfallen des Pressenstempels zu steuern.

24. Druckgieß- oder Spritzgießmaschine nach einem der Ansprüche 18 bis 23, **dadurch gekennzeichnet, daß** die Spritzgießkammer (16) mit Mitteln (20) für eine Schlichte versehen ist.

25. Verwendung einer Maschine nach einem der Ansprüche 18 bis 24 zum Spritzgießen von leitfähigen Polymeren.
